# EUROPEAN PATENT APPLICATION

(11) **EP 3 418 090 A1**
(43) Date of publication of application: **26.12.2018**
(21) Application number: 18175737.8
(22) Date of filing: 04.06.2018
(51) Int. Cl.: B60H 1/34, F24F 13/14

(54) **REGISTER**

(30) Priority: 06.06.2017 JP 2017111535
(71) Applicant: Toyota Jidosha Kabushiki Kaisha, Aichi-Ken 471-8571 (JP)
(72) Inventor: KANEDA, Kentaro, Toyota, Aichi,, 470-0496 (JP); KOBAYASHI, Ippei, Aichi-ken,, 471-8571 (JP)
(74) Representative: Kuhnen & Wacker Patent- und Rechtsanwaltsbüro PartG mbB

(57) **Abstract**

A register includes: an air outlet (4); a front movable louver (10) disposed inward of the air outlet, the front movable louver (10) turning vertically; and a bulging curved ledge portion (3) disposed below an area in front of the air outlet. The ledge portion includes a curved surface (31) that curves downward ahead, and a groove or a ridge for disturbing a flow of air along the curved surface is provided in parallel with a longitudinal direction of the front movable louver, in the curved surface.

## Description

### BACKGROUND OF THE INVENTION

### 1. Field of the Invention

The present invention relates to a register.

### 2. Description of Related Art

As air blow adjustment registers mounted in, e.g., an instrument panel of an automobile, registers each including a horizontally-elongated thin air outlet are known through, e.g., Japanese Patent Application Publication No. 2013-116650. This type of register is configured such that: a bezel fitted to a front portion of a retainer has a vertical width that decreases forward; a horizontally-elongated air outlet is provided in a front surface of the bezel; and a front movable louver is arranged immediately inward of the air outlet. At the center of the front movable louver, a center horizontal fin is disposed horizontally, and an upper auxiliary horizontal fin and a lower auxiliary horizontal fin are disposed in parallel above and below the center horizontal fin, respectively, and these horizontal fins are joined via a link bar, thereby providing a structure in which when the front movable louver is turned to face upward or downward, the respective horizontal fins face the same direction in conjunction with one another.

### SUMMARY OF THE INVENTION

However, the front shape of the above register is inclined such that an upper portion thereof is retracted toward the upstream side and a lower portion thereof projects toward the downstream side, and is thus formed as what is called a slanted shape, and the shape of an instrument panel in which the register is installed is curved so as to bulge forward, below the area in front of the air outlet of the register, and thus, a structure in which a ledge portion is located below the area in front of the air outlet is provided.

Therefore, an air blow sticking phenomenon due to the Coanda effect is likely to occur at the bulging curved portion below the area in front of the register, and upon occurrence of an air blow sticking phenomenon, an air flow along the front movable louver from the air outlet is guided downward, and thus, directivity of the air flow on the upper side relative to the front neutral position is likely to deteriorate. Therefore, a register having a structure in which a special bottom portion auxiliary fin is pivotally supported at an inner bottom portion of the air outlet so as to be capable of turning and projecting upward, and when the front movable louver is turned toward the upper side relative to the front neutral position, the bottom portion auxiliary fin is drawn out upward to prevent an air blow sticking phenomenon due to the Coanda effect at the ledge portion ahead.

However, it is necessary to draw out or back the bottom portion auxiliary fin upon the front movable louver being turned vertically, and therefore, a mechanism for turning the bottom portion auxiliary fin is complicated, resulting in an increase in number of components, thus, an increase in manufacturing cost.

The present invention provides a register including a bulging curved ledge portion located below an area in front of an air outlet, the register enabling suppression of an air blow sticking phenomenon by a simple structure.

A register according to an aspect of the present invention includes: an air outlet; a front movable louver disposed inward of the air outlet, the front movable louver turning vertically; and a bulging curved ledge portion disposed below an area in front of the air outlet, wherein the ledge portion includes a curved surface that curves downward ahead, and a groove or a ridge for disturbing the flow of air along the curved surface is provided in parallel with a longitudinal direction of the front movable louver, in the curved surface.

With the above aspect, the bulging curved ledge portion is disposed below the area in front of the air outlet and air blowing forward from the air outlet tends to flow so as to stick to the curved surface at the end portion because of the Coanda effect, but since a groove or a ridge is formed in parallel with the longitudinal direction of the front fin, in the curved surface of the ledge portion, the flow of the air along the curved surface is disturbed by the groove or the ridge.

Consequently, the phenomenon of the air flow sticking to the curved surface is suppressed, and when the front movable louver is turned to face a neutral position (toward the front side) or slightly downward, the air flows toward the front side or slightly downward with good directivity, and thus, improvement in directivity can be achieved by a simple structure, that is, provision of the groove or the ridge.

When the front fin of the front movable louver is largely turned downward, the air flow sticking to the curved surface of the ledge portion is decreased, and thus, the air can be made to blow straight along the direction of the front fin, that is, toward the lower side ahead (direction toward the lower region of an occupant), with good directivity. Furthermore, the bulging curved ledge portion is located below the area in front of the air outlet and the directivity of the blowing air is thus favorable, and thus, the air blow direction can easily be adjusted to the lower side just by slightly turning the front movable louver downward.

In the above aspect, the curved surface of the ledge portion may be formed so as to be integrated with a horizontal surface, the curved surface extending forward from the horizontal surface, and the groove or the ridge may be formed in parallel with a longitudinal direction of a front fin, in a vicinity, on the horizontal surface side, of the curved surface. Accordingly, while the design of the ledge portion being maintained in a favorable manner, the air flow sticking to the curved surface of the ledge portion can more effectively be reduced, enabling the air to blow along the direction of the front fin, with good directivity.

In the above aspect, the groove or the ridge may have a triangular shape in cross-section. In the above aspect, the groove or the ridge may have a rectangular shape in cross-section. In the above aspect, the groove or the ridge may have a semicircular shape in cross-section.

In the above aspect, a depth of the groove or a height of the ridge may be approximately 1.5 mm to approximately 2 mm; and a width in a cross-sectional direction of the groove or the ridge may be approximately 2 mm to 4 mm.

In the above aspect, a width, along an air blow direction, of the ledge portion may be approximately 1.5 times to approximately 3 times a width of the front fin.

The above aspect enables provision of a register including a bulging curved ledge portion located blow an area in front of an air outlet, the register enabling suppression of an air blow sticking phenomenon by a simple structure and thus improvement in directivity of air toward an occupant.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a front view of a register according to an embodiment of the present invention;
FIG. 2 is a plan view of the register;
FIG. 3 is a right side view of the register;
FIG. 4 is a perspective view of the register;
FIG. 5 is an exploded perspective view of the register;
FIG. 6 is an exploded perspective view of a ledge portion and a bezel;
FIG. 7 is a vertical sectional view along VII-VII in FIG. 1;
FIG. 8 is an enlarged sectional view of a vicinity of the ledge portion in FIG. 7;
FIG. 9 is a sectional view along IX-IX in FIG. 1;
FIG. 10 is a sectional view corresponding to FIG. 7 when a front movable louver is swung downward;
FIG. 11 is an enlarged sectional view of the vicinity of the ledge portion in FIG. 10;
FIG. 12 is an enlarged sectional view of a groove of the ledge portion;
FIG. 13 is a sectional view corresponding to FIG. 9 when a rear movable louver is closed;
FIG. 14 is an enlarged sectional view of a curved surface of a ledge portion according to another embodiment;
FIG. 15A is an enlarged sectional view of a curved surface of a ledge portion according to another embodiment;
FIG. 15B is an enlarged sectional view of a curved surface of a ledge portion according to another embodiment;
FIG. 15C is an enlarged sectional view of a curved surface of a ledge portion according to another embodiment; and
FIG. 15D is an enlarged sectional view of a curved surface of a ledge portion according to another embodiment.

### DETAILED DESCRIPTION OF EMBODIMENTS

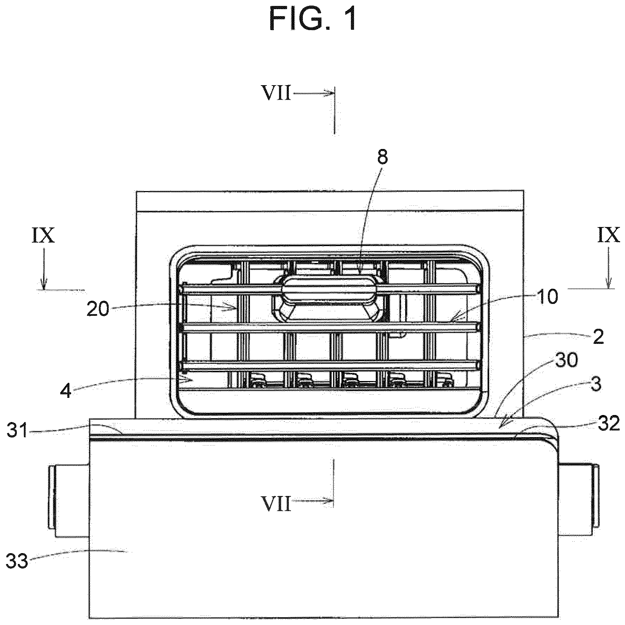

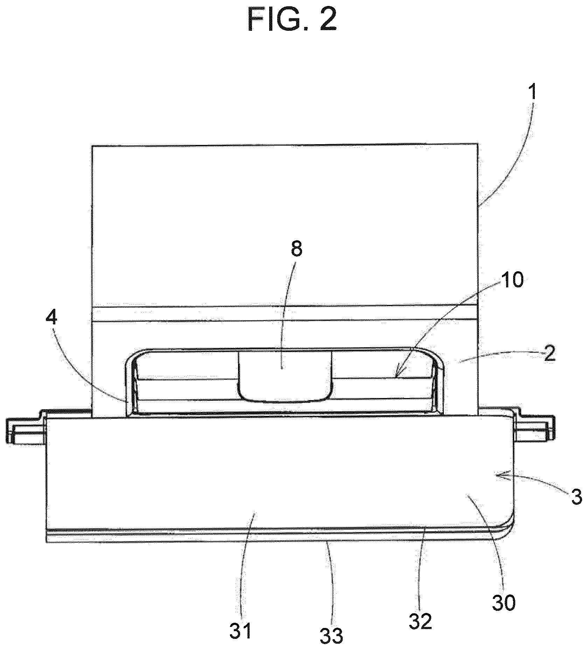

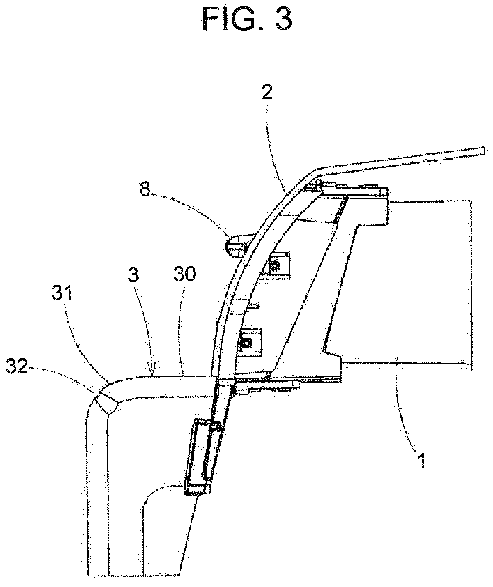

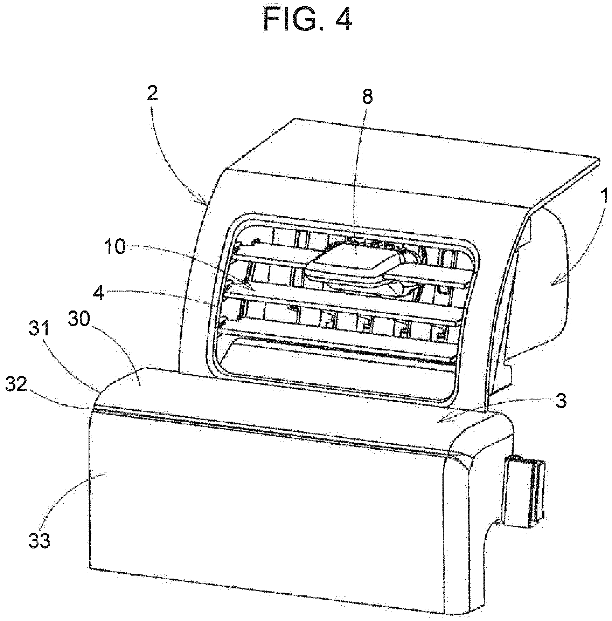

Embodiments of the present invention will be described below with reference to the drawings. As illustrated in FIGS. 1 to 4, a register includes a retainer 1 including an air passageway 9 inside, the retainer 1 being formed in a duct-like shape having a substantially rectangular shape in section, a bezel 2 attached to a front surface of the retainer 1, the bezel 2 including an air outlet 4 formed therein, a front movable louver 10 arranged inward of the air outlet 4, and a rear movable louver 20 inside the air passageway 9 upstream of the front movable louver 10, the rear movable louver 20 being arranged in a direction orthogonal to the front movable louver 10.

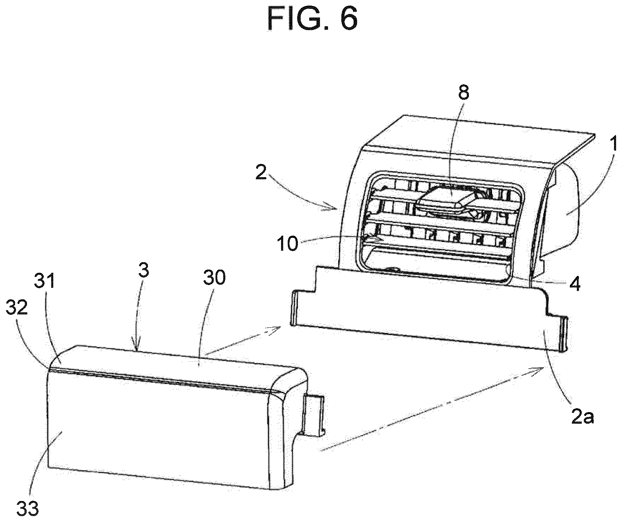

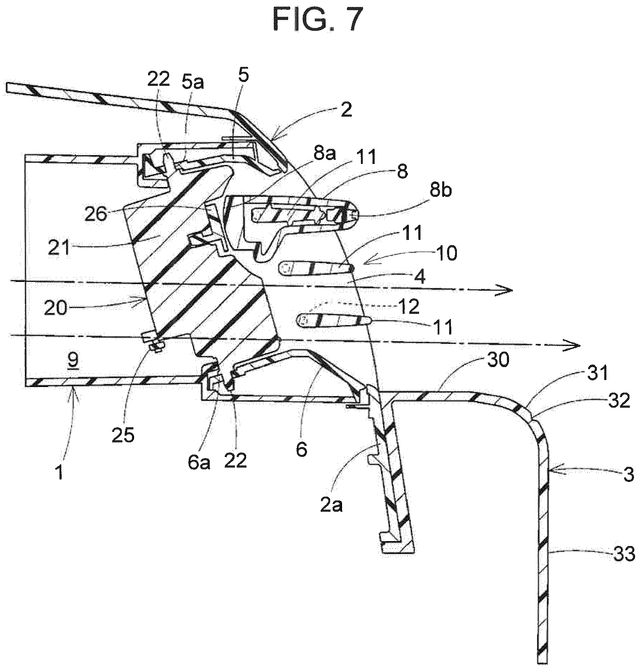

As illustrated in FIG. 6, for attachment of a bulging curved ledge portion 3, a plate-like attachment portion 2a is provided so as to extend in a lower portion of the bezel 2. As illustrated in FIGS. 6 and 7, the ledge portion 3 includes a horizontal portion including a horizontal surface 30, the horizontal portion being provided at an upper portion of the ledge portion 3, and a curved portion of a curved surface 31 that curves in a bulging manner, the curved portion being provided ahead of the horizontal surface 30 of the horizontal portion. The curved portion of the ledge portion 3 includes the curved surface 31 that curves in a downward bulging manner.

As illustrated in FIGS. 6 and 7, the ledge portion 3 is formed in a box-like cover shape, and is attached to the attachment portion 2a in the lower portion of the bezel 2 by fitting a back side portion of the ledge portion 3 to the attachment portion 2a from the front side. Consequently, as illustrated in FIG. 7, the horizontal surface 30 of the ledge portion 3 is located immediately below an area in front of the air outlet 4 of the bezel 2, and the curved surface 31 that curves downward is provided so as to extend ahead of the horizontal surface 30, and a vertical surface 33 is provided so as to extend below the curved surface 31. As described later, in the curved surface 31, one groove 32 is provided in parallel with a longitudinal direction of front fins 11 of the front movable louver 10, that is, a direction perpendicular to a direction of air blowing from the air outlet 4.

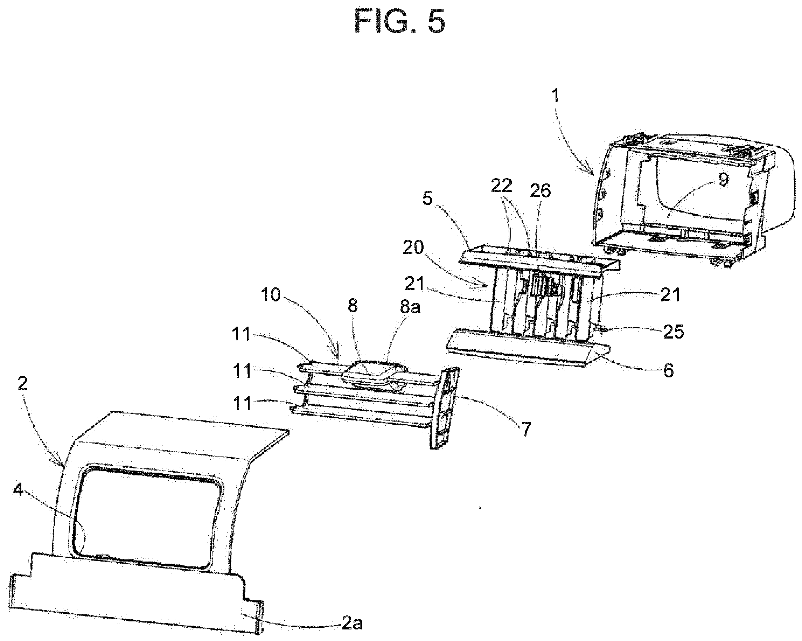

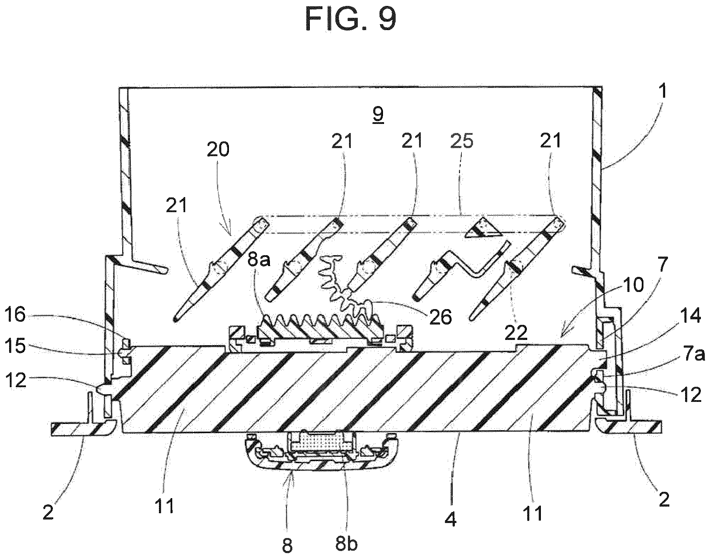

The front movable louver 10 is provided immediately inward of the air outlet 4 in the bezel 2 so as to vertically change the air blow direction. As illustrated in, e.g., FIG. 5, the front movable louver 10 includes three front fins 11, and a side pivot support member 7 that pivotally supports pivots 12 of respective one end portions of the front fins 11, and as illustrated in FIG. 9, pivots 12 at the one end portions of the front fins 11 are fitted in respective bearing holes 7a provided in the side pivot support member 7, whereby the front fins 11 are supported so as to be turnable vertically. Pivots 12 at the respective other end portions of the front fins 11 are fitted in, and are thereby pivotally supported by, respective bearing holes provided in a side portion of the retainer 1. Also, link shafts 15 are provided at the respective other end portions of the three front fins 11, and the link shafts 15 are joined to a single link bar 16. Furthermore, guide projection portions 14 are provided at the respective one end portions of the front fins 11 so as to project, and as illustrated in FIG. 9, the guide projection portions 14 engage with guide grooves provided in the side pivot support member 7. Consequently, vertical turning of the front fins 11 is guided, and an angular range of the turning is limited within a predetermined range.

In order to horizontally change the air blow direction, the rear movable louver 20 is arranged inside the air passageway 9, upstream of the front movable louver 10. The rear movable louver 20 includes a plurality of (five) rear fins 21 provided side by side in a direction orthogonal to the front movable louver 10 (vertical direction). As illustrated in FIGS. 5 and 7, pivots 22 are provided so as to project from upper and lower portions of each of the rear fins 21 of the rear movable louver 20, and the upper and lower pivots 22 are supported by an upper pivot member 5 and a lower pivot member 6 fitted in the inner side of a front portion of an opening of the retainer 1, respectively, so as to be turnable horizontally.

In other words, as illustrated in FIG. 7, a bearing hole 5a is provided in the upper pivot member 5, a bearing hole 6a is provided in the lower pivot member 6, the upper pivots 22 of the rear fins 21 are fitted in and thereby supported by the bearing holes 5a of the upper pivot member 5, and the lower pivots 22 are fitted in and thereby supported by the bearing holes 6a of the lower pivot member 6. The rear fins 21 of the rear movable louver 20 are supported via the upper and lower pivots 22 so as to be turnable horizontally, and furthermore, a single link bar 25 is linked to the rear fins 21, whereby the five rear fins 21 can turn in synchronization with one another.

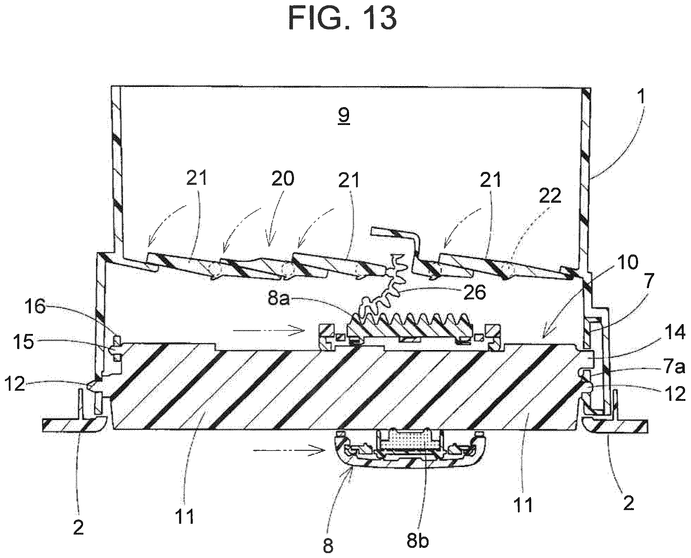

Also, as illustrated in FIGS. 7 and 9, a sector teeth portion 26 is formed in front of the center rear fin 21, and a rack portion 8a provided at a back side portion of an operation knob 8 engages with the sector teeth portion 26. The operation knob 8 is externally fitted on a front fin 11 so as to be slidable horizontally. A load providing member 8b is held inside the operation knob 8, and a protrusion portion of the load providing member 8b is in abutment with a front end portion of the front fin 11. Consequently, when the operation knob 8 is slid horizontally, an operation load is provided by moderate frictional resistance of the operation load providing member 8b, whereby the rear fins 21 of the rear movable louver 20 turn rightward or leftward and thus turn around. Here, as illustrated in FIG. 13, the rear movable louver 20 has a structure in which when the operation knob 8 is slide rightward to the maximum, the rear movable louver 20 is brought into a closed state in which all of the rear fins 21 overlap one another to close the air passageway 9.

As illustrated in FIGS. 6 and 7, the bulging curved ledge portion 3 is attached to the attachment portion 2a in the lower portion of the bezel 2 so as to project forward below the bezel 2. The ledge portion 3 includes the horizontal portion including the horizontal surface 30, the horizontal portion being provided at the upper portion of the ledge portion 3, and the curved portion that curves in a downward bulging manner, the curved portion being provided ahead of the horizontal surface 30 of the horizontal portion. The curved surface 31 that bulges ahead of the horizontal surface 30 is formed so as to curve downward, and the bulging curved ledge portion 3 is thus formed.

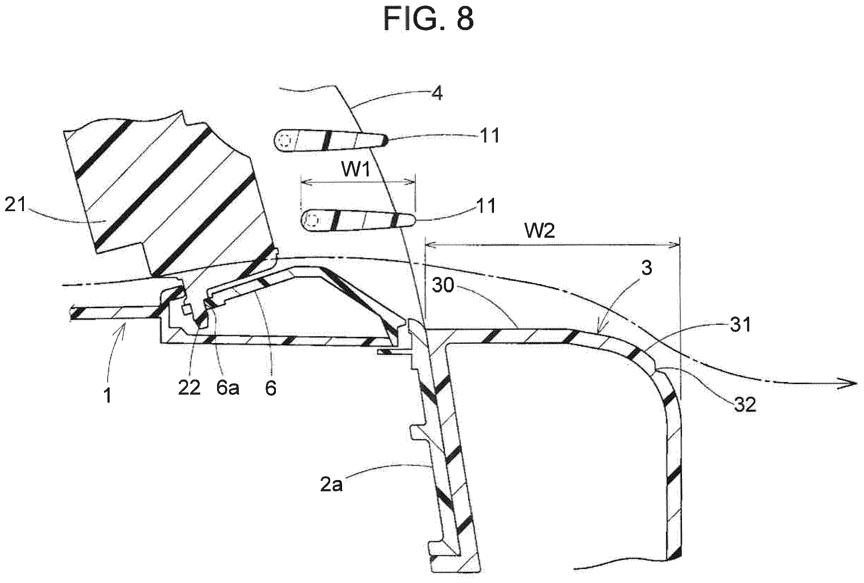

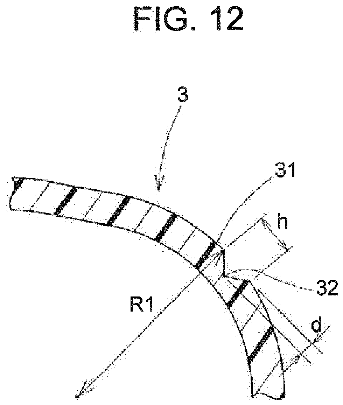

Furthermore, the vertical surface 33 is formed below the curved surface 31, and the curved surface 31 is provided so as to connect the horizontal surface 30 above and the vertical surface 33 below. The single groove 32 is provided in the curved surface 31 in parallel with the longitudinal direction of the front fins 11 of the front movable louver 10, that is, in the direction perpendicular to the direction of air blowing from the air outlet 4. As illustrated in FIG. 8, the groove 32 is formed so as to have a substantially triangular shape in cross-section. As illustrated in FIG. 12, the groove 32 has a depth d of approximately 1 mm to approximately 2.2 mm, more preferably, approximately 1.5 mm to approximately 2 mm. Also, the groove 32 has an opening width h of approximately 1.5 mm to approximately 4.5 mm, more preferably, approximately 2 mm to approximately 4 mm.

Here, as illustrated in FIG. 12, the curved surface 31 is formed in such a manner that a curvature radius R1 of the curved surface 31 is approximately ten to eleven times the depth d of the groove 32. Also, as illustrated in FIG. 8, the ledge portion 3 including the bulging curved surface 31 is formed so as to have a width W2, along the air blow direction, of approximately 1.5 to 3 times a width W1 of the front fins 11.

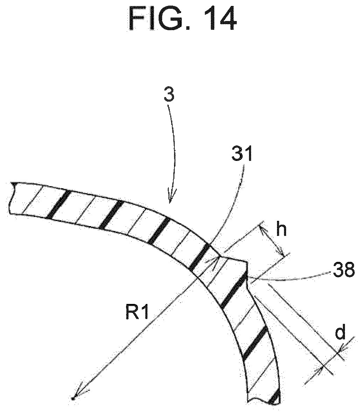

The groove 32 provided in the curved surface 31 is intended to, when air is made to blow forward or obliquely downward from the air outlet 4, disturb the flow of the air along the surface of the ledge portion 3 to prevent a phenomenon of the air flow sticking to the ledge portion surface. Therefore, as illustrated in FIG. 14, instead of the groove, a single ridge 38 can be provided in the curved surface 31 in parallel with the longitudinal direction of the front fins 11 as long as the single ridge 38 has a function that disturbs the flow of the air along the surface of the ledge portion 3.

The ridge 38 is formed so as to have a substantially triangular shape in cross-section. In this case, as illustrated in FIG. 14, the ridge 38 can have a height d of approximately 1 mm to approximately 2.2 mm, more preferably approximately 1.5 mm to approximately 2 mm as in the above. Also, the ridge 38 can have a width h in the cross-sectional direction of approximately 1.5 mm to approximately 4.5 mm, more preferably, approximately 2 mm to approximately 4 mm.

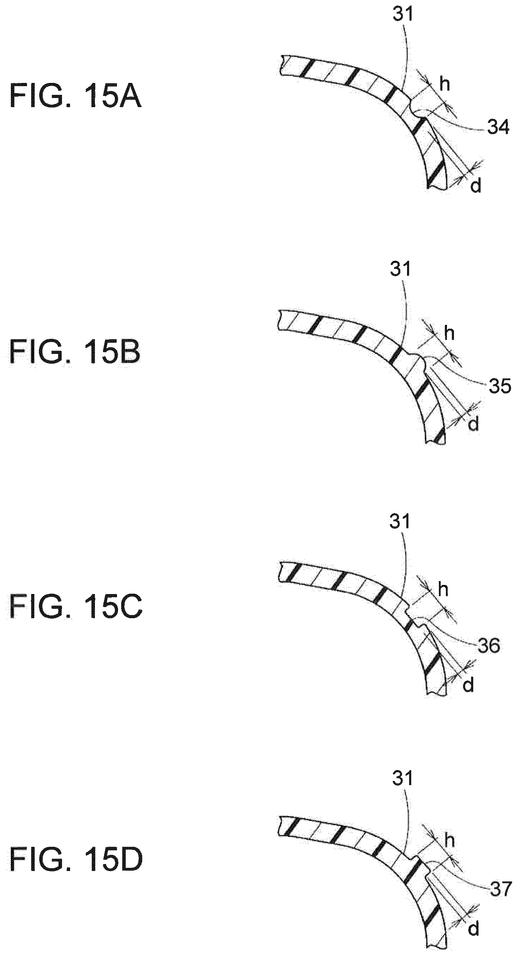

FIGS. 15A to 15D each illustrate another example of a cross-sectional shape of a groove or a ridge formed in the curved surface 31. As described above, the groove formed in the curved surface 31 only needs to have a function that disturbs the flow of air along the surface of the ledge portion 3, and thus, as illustrated in FIG. 15A, may be a groove 34 having a substantially semicircular shape in cross-section, or as illustrated in FIG. 15B, may be a ridge 35 having a substantially semicircular shape in cross-section.

Furthermore, the groove may be a groove 36 having a substantially rectangular shape in cross-section as illustrated in FIG. 15C, or may be a ridge 37 having a substantially rectangular shape in cross-section as illustrated in FIG. 15D. In this case, also, as in the above, the groove 36 or the ridge 37 can have a height d of approximately 1 mm to approximately 2.2 mm, more preferably, approximately 1.5 mm to approximately 2 mm. Also, the groove 36 or the ridge 37 can have a width h in the cross-sectional direction of approximately 1.5 mm to approximately 4.5 mm, more preferably, approximately 2 mm to approximately 4 mm.

Next, operation of the register having the above-described configuration will be described with reference to FIGS. 7 to 13. The register is mounted in, for example, an area in the vicinity of an upper portion of, e.g., an instrument panel or a dashboard inside an automobile, with an air inlet on the back surface side connected to a non-illustrated air ventilation duct. The air outlet 4 of the bezel 2 of the register is attached so as to be exposed in a front surface of the instrument panel or the dashboard and the air blow direction in the neutral state in FIG. 7 faces, for example, the vicinity of the neck of an occupant.

Upon air being made to blow in the neutral state in FIG. 7, that is, in a state in which the front movable louver 10 is made to be substantially horizontal, the air that has passed through the air passageway 9 blows forward from the air outlet 4 of the bezel 2 through areas above or below the front fins 11 of the front movable louver 10. At this time, as illustrated in FIG. 8, even if the air that has blown out from the air outlet 4 blows along the horizontal surface 30 of the ledge portion 3, the flow of the air is disturbed by the groove 32 or the ridge 38 formed in the curved surface 31 of the ledge portion 3, and thus, an air flow sticking phenomenon due to the Coanda effect hardly occurs, and the air flows straight toward the front side and thus blows with good directivity.

Therefore, even in a state in which the curved surface 31 of the ledge portion 3 is provided below the area in front of the air outlet 4, the curved surface 31 bulging forward, and the Coanda effect in which the air flows along the surface is likely to occur, the air can be made to blow toward an occupant ahead, with good directivity.

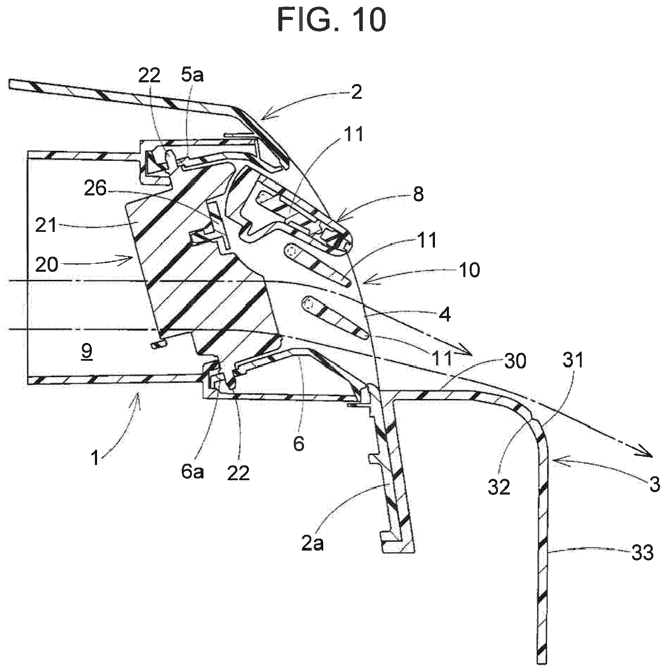

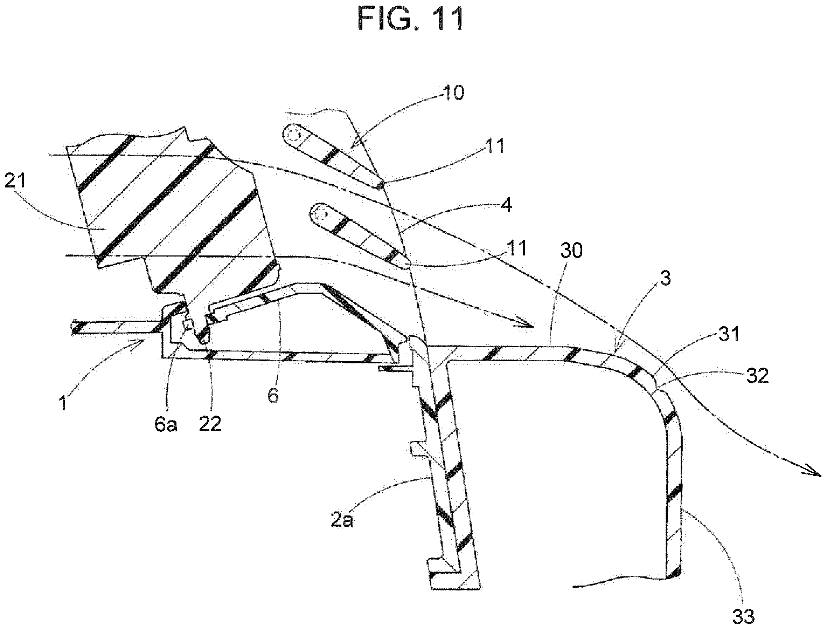

Also, when the air blow direction is changed to face downward, the front movable louver 10 is turned downward via the operation knob 8. Then, as illustrated in FIG. 10, the front fins 11 turn (tilt) downward with the respective pivots 12 as axes. Then, the flow of the air to be blown from the air outlet 4 is guided by the front fins 11 so as to be flexed toward the lower side, and as illustrated in FIG. 11, the air thus flows from the horizontal surface 30 of the ledge portion 3 located below the area in front of the front fins 11 so as to come into contact with the curved surface 31.

However, the flow of the air from the horizontal surface 30 onto the curved surface 31 is disturbed by the groove 32 or the ridge 38 formed in the curved surface 31, an air flow sticking phenomenon due to the Coanda effect hardly occurs, and the air flows straight along the direction of the front fins 11 toward an occupant with good directivity. Therefore, even if the front fins 11 of the front movable louver 10 are largely turned downward, almost no phenomenon of an air flow sticking onto the curved surface 31 of the ledge portion 3 occurs, and thus, the air can be made to blow straight along the direction of the front fins 11, that is, toward the lower side ahead (direction toward the lower region of an occupant), with good directivity.

Where the air blow direction is changed horizontally, the operation knob 8 is slid rightward or leftward on the relevant front fin 11. Then, the horizontal movement of the operation knob 8 causes the rear movable louver 20 to turn rightward or leftward via the rack portion 8a and the sector teeth portion 26, and the respective rear fins 21 of the rear movable louver 20 thus face obliquely rightward or obliquely leftward, whereby the air blow direction is changed horizontally.

As described above, during air blowing, when the front movable louver 10 is in the neutral state or turned to face obliquely downward, the air blown out forward from the air outlet 4 tends to flow so as to stick onto the curved surface 31 at an end portion because of the Coanda effect since the bulging curved ledge portion 3 is located below the area in front of the air outlet 4; however, the groove 32 or the ridge 38 is formed in parallel with the longitudinal direction of the front fins 11, in the curved surface 31 of the ledge portion 3, and thus, the flow of the air along the curved surface 31 is disturbed by the groove 32 or the ridge 38.

Consequently, the phenomenon of the air flow sticking to the curved surface 31 is suppressed and when the front movable louver 10 is turned to face the neutral position (toward the front side) or downward, the air flows toward the front side or slightly downward with good directivity, and thus, improvement in directivity can be achieved by a very simple structure, that is, provision of the groove 32 or the ridge 38.

## Claims

1. A register comprising:
an air outlet (4);
a front movable louver (10) disposed inward of the air outlet, the front movable louver (10) turning vertically; and
a bulging curved ledge portion (3) disposed below an area in front of the air outlet, wherein:
the ledge portion includes a curved surface (31) that curves downward ahead; and
a groove or a ridge for disturbing a flow of air along the curved surface is provided in parallel with a longitudinal direction of the front movable louver, in the curved surface.

2. The register according to claim 1, wherein:
the curved surface of the ledge portion is formed so as to be integrated with a horizontal surface, the curved surface extending forward from the horizontal surface; and
the groove or the ridge is formed in parallel with a longitudinal direction of a front fin, in a vicinity, on the horizontal surface side, of the curved surface.

3. The register according to claim 2, wherein the groove or the ridge has a triangular shape in cross-section.

4. The register according to claim 2, wherein the groove or the ridge has a rectangular shape in cross-section.

5. The register according to claim 2, wherein the groove or the ridge has a semicircular shape in cross-section.

6. The register according to claim 2, wherein:
a depth of the groove or a height of the ridge is approximately 1.5 mm to approximately 2 mm; and
a width in a cross-sectional direction of the groove or the ridge is approximately 2 mm to 4 mm.

7. The register according to claim 2, wherein a width, along an air blow direction, of the ledge portion is approximately 1.5 times to approximately 3 times a width of the front fin.
